# EUROPEAN PATENT SPECIFICATION

(11) **EP 1 347 211 B1**
(45) Date of publication and mention of the grant of the patent: **02.11.2006**
(21) Application number: 01974754.2
(22) Date of filing: 10.10.2001
(51) Int. Cl.: F16H 53/02, F01L 1/047

(54) **CAM BLOCK AND METHOD FOR MANUFACTURING THE SAME**
NOCKENBLOCK UND HERSTELLUNGSVERFAHREN DAFÜR
BLOC DE CAME ET SON PROCEDE DE FABRICATION

(30) Priority: 14.11.2000 JP 2000347017
(43) Date of publication of application: 24.09.2003
(73) Proprietor: HONDA GIKEN KOGYO KABUSHIKI KAISHA, Minato-ku, Tokyo 107-8556 (JP); H-one Co., Ltd., Saitama-shi Saitama (JP)
(72) Inventor: OGASAWARA, Atsushi, c/o KK.HONDA GIJUTSU KENKYUSHO, Wako-shi, Saitama 351-0113 (JP); IIZUKA, Hiroaki, c/o HIRATA TECHNICAL CO., LTD, Maebashi-shi, Gunma 379-2154 (JP); YUUKI, Masao, c/o HIRATA TECHNICAL CO., LTD, Maebashi-shi, Gunma 379-2154 (JP); MANIWA, Shigeru, c/o HIRATA TECHNICAL CO., LTD, Maebashi-shi, Gunma 379-2154 (JP); HAYAKAWA, Shohei, Hanno-shi, Saitama 357-0041 (JP)
(74) Representative: Prechtel, Jörg
(86) International application number: PCT/JP2001/008879
(87) International publication number: WO 2002/040896

(56) References cited:
- DE-A- 19 717 660
- DE-A1- 19 717 660
- DE-C- 655 953
- JP-A- 10 038 052
- US-A- 5 263 249

## Description

### Technical Field

The invention relates to a technique regarding a cam block made of metal and, more particularly, to a cam block which has an extending portion extending outwardly in one direction from a shaft through-hole for a cam shaft, is punched into an arc cam shape, and is suitable for use in on/off control or the like of, for example, an exhaust valve or an intake valve of an internal combustion engine and to a manufacturing method of such a cam block.

### Background Art

Hitherto, a cam block which is used in, for example, an internal combustion engine of a motorcycle is generally constructed in a manner such that, for example, as shown in Fig. 5, a plate thickness is relatively thick, an outline having an extending portion 2 which extends outwardly in one direction from a shaft through-hole 1 has an arc cam shape, and the cam block is rotatably supported by inserting a cam shaft (not shown) into the shaft through-hole 1 by pressure.

In the case of manufacturing such a thick cam block, usually, what is called a fine blanking method is used. A material to be worked which has a thick plate shape and is made of metal is pressed by a punching operation and an outer peripheral plate pressing operation from one side and is also pressed by a die and an inner peripheral back pressing operation from the opposite side, thereby punching the material into an arc cam shape provided with the shaft through-hole 1 and working the cam block.

However, because of a specificity of the shape of the cam block such that the cam block is thick and has the extending portion 2 which extends outwardly in one direction from a shaft through-hole 1, when pressure is applied, unevenness of the thickness in the direction of an edge position 2a shown by an arrow in Fig. 5 is caused in the extending portion 2. If the plate is cut in such an uneven state, in a shear cut surface, a defective shape (flatness, parallel degree) or a cut break surface is caused in each of a cam surface portion (a) near the edge position 2a of the extending portion 2 and an inner surface portion (b) near a hole edge position 2b of the shaft through-hole 1. There is consequently a problem such that in the shaft through-hole 1, a bore precision for cam shaft pressure insertion deteriorates and, in the cam surface portion, the position of contact with the follower such as a valve or the like is deviated and an operational precision deteriorates.

Document DE 19 717 660 A discloses a plurality of cam blocks according to the preamble of claim 1.

It is, therefore, an object of the invention to solve the conventional problem, suppress the occurrence of a cut break surface on a punched cut surface at the time of a punching work of a cam block, prevent a deterioration of a bore precision of a shaft through-hole, and eliminate a deviation of a position of contact with a follower, thereby improving operational precision.

### Disclosure of Invention

The invention is constructed as follows in order to accomplish the above object. That is, according to the invention, there is provided a plurality of cam blocks according to claim 1.

With the above construction, according to the invention, upon punching of the cam block, when the material to be worked is pressurized by the punch and the backward pressing member, unevenness of the thickness in the edge position direction of the extending portion is prevented by the concave and convex portions in the plate thickness direction. Thus, most of the punched cut surface becomes the shear cut surface. The occurrence of the cut break surfaces in the cam surface portion near the edge portion of the extending portion and the inner surface portion near the hole edge position of the shaft through-hole is suppressed. Consequently, the deterioration of the bore precision of the shaft through-hole can be prevented, the deviation of the position of contact with the follower can be eliminated, and the operational precision can be improved.

The cam block of the invention is characterized in that in the case where the concave and convex portions are seen in the cam axial direction and a center line connecting a center of the shaft through-hole and an edge position of the extending portion existing at the farthest position from the center is used as a reference, the concave and convex portions are formed in positions within an angle range of about 10° to the right and left. Therefore, by forming the concave and convex portions at the positions where unevenness of the thickness mainly occurs upon punching work as mentioned above, unevenness of the thickness in the edge position direction of the extending portion can be effectively prevented. The number of cut break surfaces occurring on the punched cut surface can be further reduced.

The plurality of cam blocks of the invention is characterized in that the forming positions on the extending portion where the concave and convex portions are formed are made different every different arc-cam shape, thereby enabling them to be discriminated. Thus, the difference of the types of the cam blocks can be easily distinguished by the eyes at the time of the assembling work of the cam blocks, and the occurrence of the erroneous assembly can be easily and certainly prevented.

Subsequently, according to the invention, the above object can be accomplished with the cam block manufacturing method according to claim 3. The invention is characterized in that a thick plate-shaped material which is made of metal and should be worked is pressed by a punch and its outer peripheral plate pressing member, and the material is received by a die and its inner peripheral backward pressing member from an opposite side and pressed, thereby forming a shaft through-hole into which a cam shaft is inserted, the material is sheared into an arc-cam shape having an extending portion which extends outwardly in one direction from the shaft through-hole, thereby forming a cam block, wherein when the material to be worked is pressed by the punch and backward pressing member, a convex portion is formed on one plate surface of the extending portion and a concave portion is formed on the other plate surface corresponding to the back side of the extending portion.

Therefore, upon punching as mentioned above, when the material to be worked is pressed by the punch and backward pressing member, a convex portion is formed on one plate surface of the extending portion and a concave portion is formed on the other plate surface corresponding to the back side of the extending portion. Therefore, unevenness of the thickness in the edge position direction of the extending portion is prevented by the concave and convex portions in the plate thickness direction. Thus, most of the punched cut surface becomes the shear cut surface. The occurrence of the cut break surfaces in the cam surface portion near the edge portion of the extending portion and the inner surface portion near the hole edge position of the shaft through-hole is suppressed. Thus, the deterioration of the bore precision of the shaft through-hole can be prevented, the deviation of the position of contact with the follower can be eliminated, and the operational precision can be improved.

Further, a manufacturing method of a cam block according to the invention is characterized in that in the case where the concave and convex portions are seen in the cam axial direction and a center line connecting a center of the shaft through-hole and an edge position of the extending portion existing at the farthest position from the center is used as a reference, the concave and convex portions are formed in positions within an angle range of about 10° to the right and left. Therefore, by forming the concave and convex portions at the positions where unevenness of the thickness mainly occurs upon punching work as mentioned above, unevenness of the thickness in the edge position direction of the extending portion can be effectively prevented. The number of cut break surfaces occurring on the punched cut surface can be further reduced.

A manufacturing method of a cam block according to the invention is characterized in that the forming positions on the extending portion where the concave and convex portions are formed are made different every different arc-cam shape, thereby enabling them to be discriminated. Therefore, the difference of the types of the cam blocks can be easily distinguished by the eyes at the time of the assembling work of the cam blocks, and the occurrence of the erroneous assembly can be easily and certainly prevented.

### Brief Description of Drawings

Fig. 1 is an explanatory diagram showing a construction of a die for punching a cam block by a cam block manufacturing method of the invention.
Fig. 2(A) is a front view of the cam block obtained after the punching work and Fig. 2(B) is a side sectional view.
Fig. 3 is a perspective view of a cam block assembly which is obtained, by assembling cams and used in an internal combustion engine.
Fig. 4 is a front view showing a a cam block according to the present invention.
Fig. 5 is a perspective view showing a conventional cam block.

### Best Mode for Carrying Out the Invention

An embodiment of the invention will be described hereinbelow further in detail with reference to the drawings.

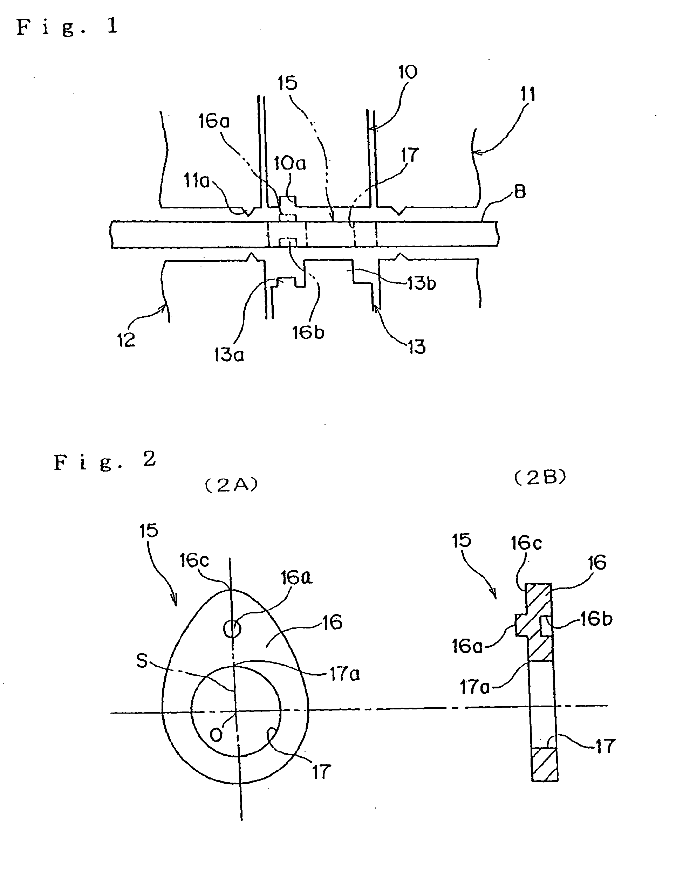

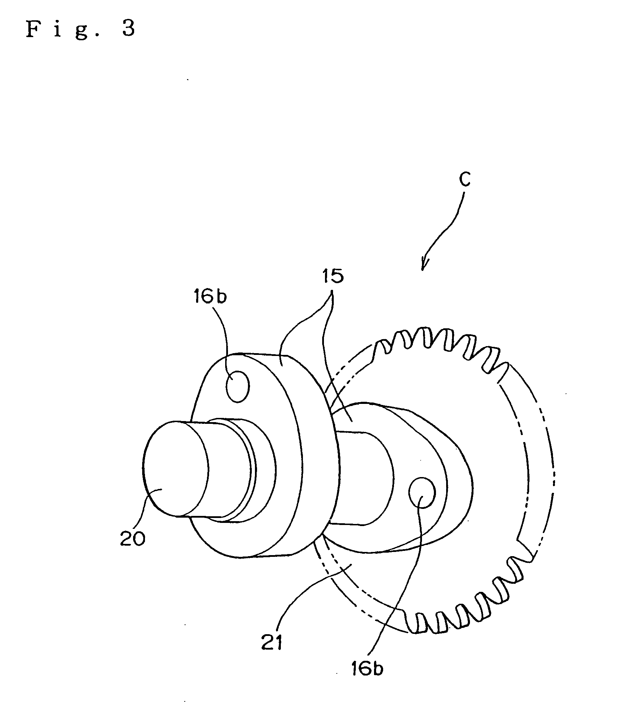

Fig. 1 shows an example of a die which is used in the case of punching a cam block by using a manufacturing method according to the invention. Figs. 2A and 2B show the cam block obtained by being punched by the manufacturing method of the invention. As such a cam block, for example, a cam block which is used for an opening/closing control of an exhaust valve or an intake valve of an internal combustion engine for a motorcycle will be explained.

In Fig. 2, reference numeral 15 denotes a cam block made of metal and having an arc-cam-shaped outline. The cam block 15 has: a shaft through-hole 17 into which a cam shaft 20 (which will be explained hereinlater)made of metal is inserted by pressure; and an extending portion 16 which extends outwardly in one direction from the shaft through-hole 17. Particularly, a convex portion 16a is formed on one plate surface of the extending portion 16 of the cam block 15 and a concave portion 16b is formed on the other plate surface corresponding to the back side of the extending portion 16.

As shown in Fig. 1, the die for punching the cam block 15 is fundamentally used in the case of finely shearing it by, for example, a fine blanking method. An upper die of the die has a punch 10 and a plate pressing member 11 arranged at an outer peripheral position thereof, and a lower die has a die 12, a backward pressing member 13 arranged at an inner peripheral position of a hole of the die 12, and the like. The plate pressing member 11 has an annular projection 11a on a pressurizing surface on the lower side.

With respect to this die, particularly, the punch 10 has a shape such that a cylindrical concave 10a adapted to form the convex portion 16a is formed on the lower pressurizing surface corresponding to an outline curve of the cam block 15. The backward pressing member 13 which faces the punch 10 is formed in a shape such that a cylindrical projection 13a adapted to form the concave portion 16b is provided at the position corresponding to the concave 10a of the punch 10 and a cylindrical projection 13b adapted to punch the shaft through-hole 17 is provided.

In the case of manufacturing the cam block 15 by using the die by the cam block manufacturing method of the invention, the punch 10 is moved downward together with the plate pressing member 11 by a pressing apparatus (not shown) and the annular projection 11a is thrust into the surface of a thick-plate-like material (blank) B which is made of metal and should be worked at a position around a shearing outline, thereby pressing the material B. On the other hand, the material B is received by the die 12 and backward pressing member 13 and pressed, thereby shearing the outline into an arc-cam shape also as shown in Fig. 2 and working the cam block 15.

At the time of the shearing work, when the material B is pressurized by the punch 10 and backward pressing member 13, the cylindrical convex portion 16a is formed on one plate surface of the extending portion 16 in accordance with the concave 10a of the punch 10, the shaft through-hole 17 is formed by punching the other plate surface by the projection 13b of the backward pressing member 13, and at the same time, the concave portion 16b is formed on the back side of the convex portion 16a by half-punching the material B by the projection 13a. Upon shearing, since the concave and convex portions 16b and 16a are formed in the plate thickness direction of the extending portion 16, unevenness of the thickness in the direction of an edge position 16c of the extending portion 16 is prevented. Thus, most of the punching cut surface becomes a shear cut surface and the occurrence of cut break surfaces in both of a cam surface portion near the edge position 16c of the extending portion 16 and an inner surface portion near a hole edge position 17a of the shaft through-hole 17 is suppressed.

Subsequently, after the punching step, the cam block 15 is positioned and supported by using a positioning tool (not shown) and the cam shaft 20 is inserted and penetrated by pressure into the shaft through-hole 17 as shown in Fig. 3. In the example shown in the diagram, two cam blocks 15 are positioned by deviating phases by a predetermined angle and assembled to the cam shaft 20 and a gear 21 is similarly assembled thereto, thereby forming a cam assembly C. When the cam assembly C is used in the internal combustion engine, a timing gear (not shown) attached onto a crank shaft which is rotated synchronously with an engine cycle is come into engagement with the gear 21, thereby rotating the cam shaft 20. The cam blocks 15 are rotated in accordance with the rotation of the cam shaft 20, thereby performing an opening/closing control of an exhaust valve or an intake valve.

The concave and convex portions 16b and 16a of the cam block 15 are formed on the extending portion 16 as mentioned above. In this case, as shown in Figs. 2A and 2B, it is preferable that they are arranged on a center line S connecting a center O of the shaft through-hole 17 and an edge position 16c of the extending portion 16 existing at the farthest position from the center O, that is, they are formed in intermediate positions on a line segment connecting the edge position 16c and the hole edge position 17a of the shaft through-hole 17 that is nearest to the edge position 16c.

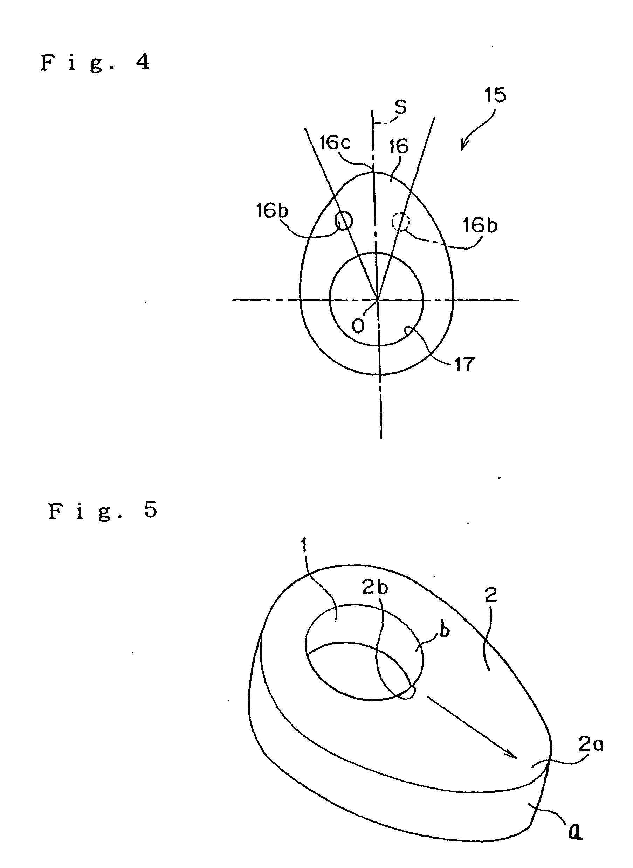

In the case where the concave and convex portions 16b and 16a are formed on the extending portion 16, for example, as shown in Fig. 4, it is preferable that the center line S is used as a reference and they are formed in positions within an angle range of, for example, about 10° to the right and left.

Although each of the concave and convex portions 16b and 16a has the cylindrical shape, it can also have another proper shape like a prism or the like.

Although not shown, according to the invention, it is also possible to discriminate the concave and convex portions 16b and 16a on the extending portion 16 by making the forming positions different every different arc-cam shape of the cam block. Thus, the user can easily distinguish a difference of the types of the cam blocks by the eyes at the time of the assembling work of the cam blocks, and the occurrence of an erroneous assembly can be prevented.

Although the invention has been described with respect to the example of the cam blocks which are used in the internal combustion engine for a motorcycle and the manufacturing method of such cam blocks, the invention can be also widely applied to a case of a cam having an arc-cam shape which is used in any apparatus other than the internal combustion engine and a manufacturing method of such a cam block.

### Industrial Applicability

As mentioned above, the invention is useful as a cam block made of metal which is used in various internal combustion engines for a motorcycle and the like and also suitable for manufacturing such a kind of cam block. Further, it is also useful as a cam block having an arc-cam shape which is used in any apparatus other than the internal combustion engine and suitable for manufacturing such a kind of cam block.

## Claims

1. A plurality of cam blocks (15), each made of metal and having an arc-cam-shaped outline, comprising: a shaft through-hole (17) into which a cam shaft (20) is inserted by pressure; and an extending portion (16) which extends outwardly in one direction from said shaft through-hole (17), wherein a convex portion (16a) is formed on one plate surface of said extending portion (16), a concave portion (16b) is formed on the other plate surface corresponding to the back side of said extending portion (16),
**characterized in that** the forming positions on said extending portion (16) where said concave and convex portions (16a, 16b) are formed are made different for every different arc-cam shape, thereby enabling them to be discriminated, when two cam blocks (15) are integratedly assembled.

2. A plurality of cam blocks according to claim 1, wherein in the case where said concave and convex portions (16a, 16b) are seen in the cam axial direction and a center line (S) connecting a center (0) of said shaft through-hole (17) and an edge position (16c) of said extending portion (16) existing at the farthest position from said center (0) is used as a reference, said concave and convex portions (16a, 16b) are formed in positions within an angle range of about 10° to the right and left.

3. A cam block manufacturing method whereby a thick plate-shaped material which is made of metal and should be worked is pressed by a punch (10) and its outer peripheral plate pressing member (11), and said material is received by a die (12) and its inner peripheral backward pressing member (13) from an opposite side and pressed, thereby forming a shaft through-hole (17) into which a cam shaft (20) is inserted, and said material is sheared into an arc-cam shape having an extending portion (16) which extends outwardly in one direction from said shaft through-hole (17), thereby forming a cam block (15), wherein when the material to be worked is pressed by said punch (10) and said backward pressing member (13), a convex portion (16a) is formed on one plate surface on the punch side of said extending portion (16) and a concave portion (16b) is formed on said other plate surface corresponding to the back side of said extending portion (16), **characterized in that** the forming positions on said extending portion (16) where said concave and convex portions (16a, 16b) are formed are made different for every different arc-cam shape, thereby enabling them to be discriminated.

4. A cam block manufacturing method according to claim 3, wherein in the case where said concave and convex portions (16a, 16b) are seen in the cam axial direction and a center line (S) connecting a center (0) of said shaft through-hole (17) and an edge position (16c) of said extending portion (16) existing at the farthest position from said center (0) is used as a reference, the concave and convex portions (16a, 16b) are formed in positions within an angle range of about 10° to the right and left.

## Patentansprüche

1. Mehrzahl von Nockenblöcken (15), welche jeweils aus Metall hergestellt sind und einen nockenbogenförmigen Umriss aufweisen, umfassend: ein Wellen-Durchgangsloch (17), in den eine Nockenwelle (20) unter Druck eingesetzt wird; und einen sich erstreckenden Abschnitt (16), der sich nach außen in einer Richtung von dem Wellen-Durchgangsloch (17) aus erstreckt, wobei ein konvexer Abschnitt (16a) an einer Plattenoberfläche des sich erstreckenden Abschnitts (16) gebildet ist, und ein konkaver Abschnitt (16b) an der anderen Plattenoberfläche, die der Rückseite des sich erstreckenden Abschnitts (16) entspricht, gebildet ist,
**dadurch gekennzeichnet, dass** die Bildungspositionen an dem sich erstreckenden Abschnitt (16), an denen der konkave und der konvexe Abschnitt (16a, 16b) gebildet sind, für jede unterschiedliche Nockenbogenform unterschiedlich ausgeführt sind, wodurch diese unterscheidbar sind, wenn zwei Nockenblöcke (15) integral zusammengebaut werden.

2. Mehrzahl von Nockenblöcken nach Anspruch 1, wobei für den Fall, dass die konvexen und konkaven Abschnitte (16a, 16b) in axialer Richtung des Nockens betrachtet werden, und eine Mittellinie (S), welche eine Mitte (O) des Wellen-Durchgangslochs (17) und eine Randposition (16c) des sich erstreckenden Abschnitts (16), die sich an der am weitesten von der Mitte (O) weg gelegenen Position befindet, verbindet, als Bezug verwendet wird, der konkave und der konvexe Abschnitt (16a, 16b) in Positionen innerhalb eines Winkelbereichs von etwa 10° nach links und rechts gebildet sind.

3. Verfahren zur Herstellung von Nockenblöcken, wobei ein dickes, plattenförmiges Material, das aus Metall hergestellt und zu bearbeiten ist, durch einen Stanzer (10) und dessen Außenumfangs-Plattendruckelement (11) gedrückt wird, und wobei das Material von einer Form (12) und deren Innenumfangs-Gegendruckelement (13) von einer gegenüberliegenden Seite aufgenommen und gedrückt wird, wodurch ein Wellen-Durchgangsloch (17) gebildet wird, durch das eine Nockenwelle (20) eingeführt wird, und wobei das Material in eine Nockenbogenform abgeschert wird, welche einen sich erstreckenden Abschnitt (16) aufweist, der sich von dem Wellen-Durchgangsloch (17) aus nach außen in einer Richtung erstreckt, wodurch ein Nockenblock gebildet wird, wobei, wenn das zu verarbeitende Material durch den Stanzer (10) und das Gegendruckelement (13) gedrückt wird, ein konvexer Abschnitt (16a) an einer Plattenoberfläche an der Stanzerseite des sich erstreckenden Abschnitts (16) gebildet wird, und ein konkaver Abschnitt (16b) an der anderen Plattenoberfläche gebildet wird, die der Rückseite des sich erstreckenden Abschnitts (16) entspricht,
**dadurch gekennzeichnet, dass** die Bildungspositionen an dem sich erstreckenden Abschnitt (16), an denen der konkave und der konvexe Abschnitt (16a, 16b) gebildet sind, für jede unterschiedliche Nockenbogenform unterschiedlich ausgeführt sind, wodurch diese unterscheidbar sind.

4. Verfahren zur Herstellung von Nockenblöcken nach Anspruch 3,
wobei für den Fall, dass die konvexen und konkaven Abschnitte (16a, 16b) in axialer Richtung des Nockens betrachtet werden, und eine Mittellinie (S), welche eine Mitte (O) des Wellen-Durchgangslochs (17) und eine Randposition (16c) des sich erstreckenden Abschnitts (16), die sich an der am weitesten von der Mitte (O) weg gelegenen Position befindet, verbindet, als Bezug verwendet wird, der konkave und der konvexe Abschnitt (16a, 16b) in Positionen innerhalb eines Winkelbereichs von etwa 10° nach links und rechts gebildet sind.

## Revendications

1. Pluralité de blocs de cames (15), chacun composé de métal et ayant un contour en forme de came arquée, comprenant : un trou débouchant d'arbre (17) dans lequel un arbre à cames (20) est inséré par pression ; et une partie saillante (16) qui s'étend vers l'extérieur dans une direction depuis ledit trou débouchant d'arbre (17), dans laquelle une partie convexe (16a) est formée sur une première surface plate de ladite partie saillante (16), une partie concave (16b) est formée sur l'autre surface plate correspondant au dos de ladite partie saillante (16), **caractérisée en ce que** les positions de formation où lesdites parties concave et convexe (16a, 16b) sont formées sur ladite partie d'extension (16) sont rendues différentes pour chaque forme différente de came arquée, leur permettant ainsi d'être différentiées, quand deux blocs de cames (15) sont assemblés de manière intégrée.

2. Pluralité de blocs de cames selon la revendication 1, dans laquelle dans le cas où lesdites parties concave et convexe (16a, 16b) sont vues dans la direction axiale de came et une ligne centrale (S) reliant un centre (O) dudit trou débouchant d'arbre (17) et une position de bord (16c) de ladite partie saillante (16) existant dans la position la plus éloignée dudit centre (0) est utilisée comme une référence, lesdites parties concave et convexe (16a, 16b) sont formées dans des positions à l'intérieur d'une plage angulaire d'environ 10° vers la droite et la gauche.

3. Procédé de fabrication de blocs de cames par lequel un matériau épais en forme de plaque qui est composé de métal et devrait être usiné est pressé par un poinçon (10) et son élément périphérique extérieur de pressage en plaque (11) et ledit matériau est reçu par une matrice (12) et son élément périphérique intérieur de pressage arrière (13) depuis un côté opposé et pressé, formant ainsi un trou débouchant d'arbre (17) dans lequel un arbre à cames (20) est inséré, et ledit matériau est découpé en une forme de came arquée ayant une partie saillante (16) qui s'étend vers l'extérieur dans une direction depuis ledit trou débouchant d'arbre (17), formant ainsi un bloc de cames (15), dans lequel quand le matériau à usiner est pressé par ledit poinçon (10) et ledit élément de pressage arrière (13), une partie convexe (16a) est formée sur une surface plate sur le côté du poinçon de ladite partie saillante (16) et une partie concave (16b) est formée sur ladite autre surface plate correspondant au dos de ladite partie saillante (16), **caractérisé en ce que** les positions de formation où lesdites parties concave et convexe (16a, 16b) sont formées sur ladite partie d'extension (16) sont rendues différentes pour chaque forme différente de came arquée, leur permettant ainsi d'être différentiées.

4. Procédé de fabrication de blocs de cames selon la revendication 3, dans lequel dans le cas où lesdites parties concave et convexe (16a, 16b) sont vues dans la direction axiale de came et une ligne centrale (S) reliant un centre (0) dudit trou débouchant d'arbre (17) et une position de bord (16c) de ladite partie d'extension (16) existant dans la position la plus éloignée dudit centre (O) est utilisée comme une référence, lesdites parties concave et convexe (16a, 16b) sont formées dans des positions à l'intérieur d'une plage d'angle d'environ 10° vers la droite et la gauche.
